(19) **Europäisches Patentamt / European Patent Office / Office européen des brevets**

(11) **EP 3 563 047 B1**

(12) **FASCICULE DE BREVET EUROPEEN**

(45) Date de publication et mention de la délivrance du brevet:
**27.07.2022 Bulletin 2022/30**

(21) Numéro de dépôt: **17832308.5**

(22) Date de dépôt: **28.12.2017**

(51) Classification Internationale des Brevets (IPC):
**F02C 6/08** (2006.01)     **F01D 17/10** (2006.01)

(52) Classification Coopérative des Brevets (CPC):
**F02C 6/08; F01D 17/105;** F05D 2240/129;
F05D 2270/101; Y02T 50/60

(86) Numéro de dépôt international:
**PCT/FR2017/053862**

(87) Numéro de publication internationale:
**WO 2018/122538 (05.07.2018 Gazette 2018/27)**

(54) **MOYEU DE CARTER INTERMÉDIAIRE COMPRENANT DES CANAUX DE GUIDAGE DU FLUX DE DÉCHARGE FORMÉS PAR LES AILETTES DE DÉCHARGE**

ZWISCHENGEHÄUSENABE MIT VON DEN ABFLAUFRIPPEN GEFORMTEN ABLAUFSTROMFÜHRUNGSKANÄLEN

INTERMEDIATE HOUSING HUB COMPRISING DISCHARGE FLOW GUIDING CHANNELS FORMED BY THE DISCHARGE FINS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.12.2016 FR 1663562**

(43) Date de publication de la demande:
**06.11.2019 Bulletin 2019/45**

(73) Titulaire: **Safran Aircraft Engines**
**75015 Paris (FR)**

(72) Inventeurs:
• **SZYDLOWSKI, Julien, Antoine, Henri, Jean**
**77550 Moissy-Cramayel Cedex (FR)**
• **LAGARDE, Romain, Nicolas**
**77550 Moissy-CramayelCedex (FR)**
• **MADIOT, Ghislain, Maxime, Romuald**
**77550 Moissy-Cramayel Cedex (FR)**
• **LUKOWSKI, Benjamin**
**77550 Moissy-Cramayel Cedex (FR)**

(74) Mandataire: **Regimbeau**
**20, rue de Chazelles**
**75847 Paris Cedex 17 (FR)**

(56) Documents cités:
EP-A1- 3 040 549     WO-A1-2006/091142
FR-A1- 3 002 296

**Description**

DOMAINE DE L'INVENTION

L'invention concerne le domaine général des turbomachines à double flux, et plus particulièrement des vannes de décharge permettant la régulation de l'air en sortie d'un compresseur d'une telle turbomachine, lesdites vannes étant parfois désignées par leur acronyme anglais VBV (pour Variable Bleed Valves).

ARRIERE-PLAN TECHNOLOGIQUE

Une turbomachine à double flux comprend généralement, d'amont en aval dans le sens de l'écoulement des gaz, une soufflante, un espace annulaire d'écoulement primaire et un espace annulaire d'écoulement secondaire. La masse d'air aspirée par la soufflante est donc divisée en un flux primaire F1, qui circule dans la veine d'écoulement primaire 10, et en un flux secondaire F2, qui est concentrique avec le flux primaire F1 et circule dans la veine d'écoulement secondaire 14.

La veine d'écoulement primaire 10 traverse un corps primaire comprenant un ou plusieurs étages de compresseurs, par exemple un compresseur basse pression et un compresseur haute pression, une chambre de combustion, un ou plusieurs étages de turbines, par exemple une turbine haute pression et une turbine basse pression, et une tuyère d'échappement des gaz.

De façon connue en soi, la turbomachine comprend par ailleurs un carter intermédiaire dont le moyeu est agencé entre le carter du compresseur basse pression (ou booster) et le carter du compresseur haute pression. Le carter intermédiaire comprend des vannes de décharge ou VBV, dont le rôle est de réguler le débit en entrée du compresseur haute pression afin notamment de limiter des risques de pompage du compresseur basse pression en évacuant une partie de l'air en dehors de l'espace d'écoulement primaire 10.

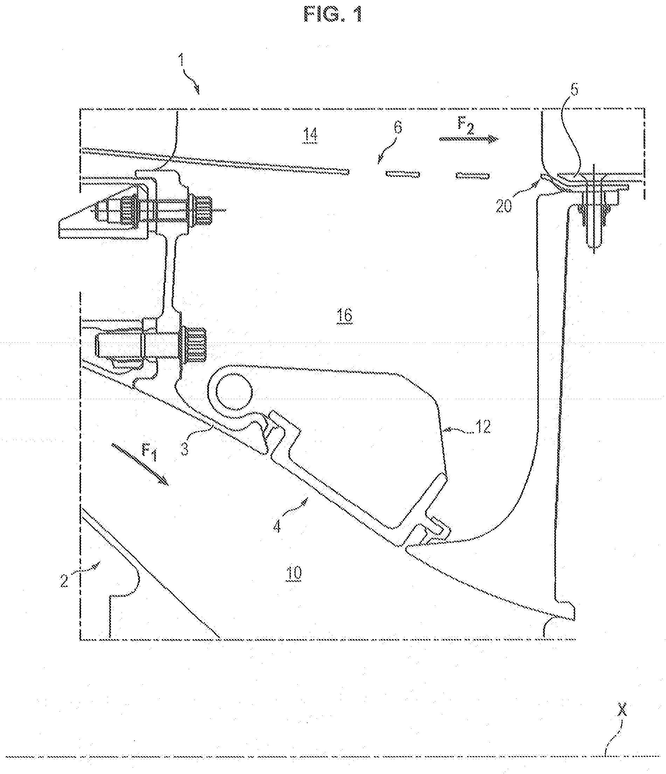

Comme l'illustre la figure 1, qui est une vue partielle en coupe axiale d'un turboréacteur d'avion à double corps et double flux d'un type connu, les moyeux 2 des carters intermédiaires 1 comprennent habituellement deux viroles annulaires coaxiales, respectivement interne 3 et externe 5, reliées mutuellement.

La virole interne 3 délimite la veine annulaire d'écoulement primaire 10 du flux primaire F1 de la turbomachine et comporte des orifices 4 de prélèvement qui sont répartis de façon circonférentielle autour de l'axe X de la virole interne 3 (qui est coaxiale avec le moyeu 2). Un tel orifice 4 est classiquement obturé par une vanne de décharge 12 correspondante destinée à la régulation du débit du compresseur haute pression. Une telle vanne de décharge 12 peut notamment comprendre une porte qui est montée pivotante sur la virole interne 3.

La virole externe 5 délimite quant à elle la veine d'écoulement secondaire 14 du flux secondaire F2 de la turbomachine. Elle comporte en sa partie aval une ou plusieurs ouïes 6 d'évacuation, également réparties de façon circonférentielle autour de l'axe X.

Lorsque le débit d'air pouvant entrer dans le compresseur haute pression est réduit, un surplus d'air dans la veine d'écoulement secondaire 14 peut alors être évacué dans l'espace interveine 16. On évite ainsi que des phénomènes de pompage pouvant conduire à une détérioration voire une destruction complète du compresseur basse pression puissent se produire.

Lorsque le compresseur haute pression est au contraire en surpression, les orifices 4 et leurs portes 12, l'espace interveine 16 et les ouïes 6 permettent l'évacuation d'air de la veine d'écoulement primaire 10 vers la veine d'écoulement secondaire 14 de la turbomachine.

Notamment, lorsqu'on ouvre une vanne de décharge 12, un flux d'air est écopé dans le flux F1 de la veine primaire 10. Ce flux d'air écopé traverse l'interveine 16 et est évacué dans la veine d'écoulement 14 par les ouïes 6.

Typiquement, ces ouïes 6 sont munies de grilles 20 destinées à diriger le flux d'air sortant de la zone interveine 16.

Les turbomachines modernes opèrent à des taux de dilution (plus connus sous leur terminologie anglaise de « bypass ratio ») de plus en plus importants. Afin de limiter les pertes par chocs dans les écoulements supersoniques en tête de soufflante, la vitesse angulaire de rotation de la soufflante est réduite. Cela a pour effet de réduire le taux de compression de la soufflante. A des taux de compression plus faibles, les pertes de charge et de décollement du flux secondaire F2 ont donc un impact plus important et doivent être limitées au maximum. Ces pertes de charges sont présentes dans les zones présentant notamment des irrégularités de surface.

Par ailleurs, les architectures des turbomachines actuelles tendent à limiter l'espace disponible entre la veine principale et la veine secondaire afin d'atteindre des taux de dilution élevés. Ainsi, elles ne permettent pas d'orienter correctement le flux de décharge avant son injection dans la veine secondaire.

Le document FR 3 002 296 décrit un carter intermédiaire conforme au préambule de la revendication 1.

RESUME DE L'INVENTION

Un objectif de l'invention est donc de proposer une turbomachine à double flux comprenant des vannes de décharge, permettant de réduire les pertes de charge et les risques de décollement du flux secondaire dans la veine secondaire afin d'augmenter l'opérabilité de la turbomachine, qui soit simple et facile à mettre en œuvre, sans pour autant augmenter la masse de la turbomachine.

Pour cela, l'invention propose un carter intermédiaire pour une turbomachine à double flux, ledit carter étant défini par la revendication 1 et comprenant entre autres :

- une virole interne configurée pour délimiter une veine d'écoulement primaire du flux de gaz primaire de la turbomachine,
- une virole externe configurée pour délimiter une veine d'écoulement secondaire du flux de gaz secondaire de ladite turbomachine,
- un espace interveine,
- au moins une vanne de décharge pour la dérivation d'une partie du flux primaire dans l'espace interveine,
- au moins une évacuation débouchant de la virole externe dans la veine d'écoulement secondaire,

L'évacuation comprend un manchon d'évacuation et une ou plusieurs ailettes de décharge qui s'étendent dans ledit manchon, des ailettes et des parois du manchon définissant ensemble plusieurs conduits de redressement adaptés pour évacuer un flux de gaz de l'espace interveine en le redirigeant dans la veine d'écoulement secondaire, la longueur de corde d'au moins l'une des ailettes étant supérieure à 50%, de préférence 75%, d'une longueur de conduit du manchon.

Selon un deuxième aspect, l'invention propose également une turbomachine comprenant un tel carter intermédiaire.

BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :

La figure 1, qui a été décrite ci-dessus, est une représentation schématique en coupe axiale d'un moyeu de carter intermédiaire connu de l'art antérieur,

La figure 2 est une vue en coupe illustrant un mode de réalisation possible de l'invention,

La figure 3 illustre, en vue de dessus, l'orientation au niveau de la veine d'écoulement secondaire des ailettes d'une ouïe d'évacuation d'un moyeu de carter intermédiaire conforme à l'invention,

La figure 4 est une vue partielle en perspective d'un exemple de réalisation d'un moyeu de carter intermédiaire conforme à l'invention,

La figure 5 est une vue en perspective d'un exemple de réalisation d'un conduit de veine de décharge d'un moyeu de carter intermédiaire conforme à l'invention, et

La figure 6 illustre schématiquement le profil d'une ailette et ses caractéristiques,

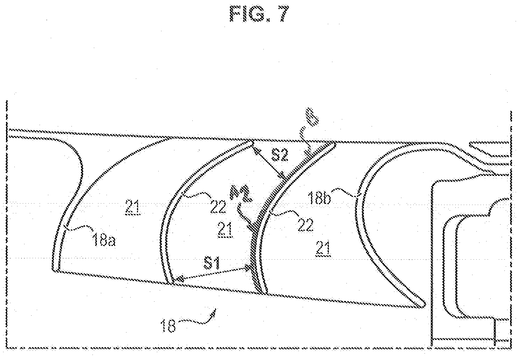

La figure 7 illustre un exemple de déviation d'angle des ailettes d'une évacuation d'un moyeu de carter intermédiaire conforme à l'invention,

DESCRIPTION DETAILLEE D'UN MODE DE REALISATION

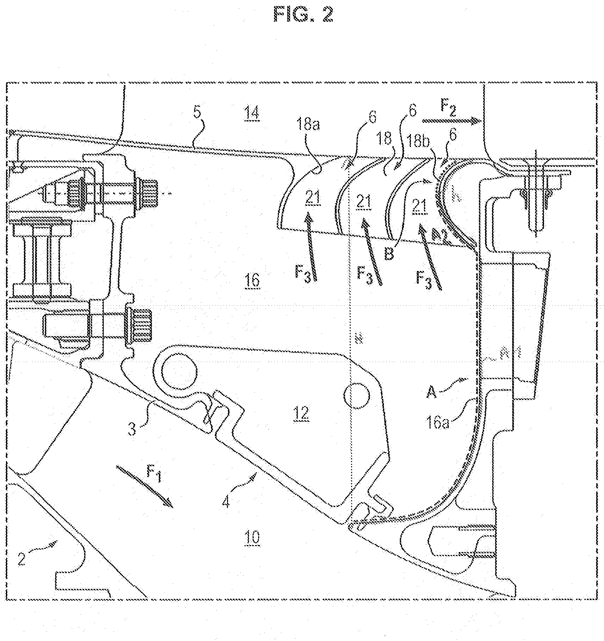

Dans ce qui suit, un moyeu 2 de carter intermédiaire pour une turbomachine à double flux et un carter intermédiaire associé vont à présent être décrits en référence aux figures 2 et suivantes.

Les pièces de moyeu 2 de carter intermédiaire de l'art antérieur déjà décrites sont également présentes dans les modes de réalisations qui suivent. Pour ces pièces, les références numériques qui les désignaient sur la figure 1 ont été reprises.

En particulier, comme dans le cas du moyeu illustré en figure 1, un moyeu 2 de carter intermédiaire conforme à l'invention comprend :

- une virole interne 3 configurée pour délimiter extérieurement une veine d'écoulement primaire 10 du flux F1 de gaz primaire de la turbomachine,
- une virole externe 5 configurée pour délimiter intérieurement une veine d'écoulement secondaire 14 du flux F2 de gaz secondaire de ladite turbomachine, et
- un espace interveine 16 qui comprend une ou plusieurs évacuations 6 qui débouchent dans la virole externe 5.

L'orifice d'admission 4, qui est formé dans la virole interne 3 du moyeu 2, peut être sélectivement ouvert ou fermé par une porte 12 en fonction des phases de vol de la turbomachine. De préférence, la porte 12 est mobile entre une position de fermeture, dans laquelle la porte 12 ferme l'orifice d'admission 4, et une position d'ouverture, dans laquelle la porte 12 libère l'orifice d'admission 4. Par exemple, la porte 12 peut être montée articulée sur la virole interne 3 ou comprendre une trappe à glissière. La porte 12 peut notamment être logée dans l'espace interveine 16 en position de fermeture.

Une évacuation 6 comprend :

- un manchon 18 qui s'étend à l'intérieur de l'interveine 16 et dont des parois intérieures amont et aval 18a, 18b sont profilées avec une certaine courbure;
- une pluralité d'ailettes de décharge 22, qui s'étendent à l'intérieur du manchon 18 et qui définissent avec ledit manchon 18 une pluralité de conduits d'air 21 qui assurent l'évacuation de l'air traversant l'interveine 16 et sa redirection dans le flux secondaire 14.

Le manchon 18 débouche dans l'espace d'écoulement secondaire 14 au niveau de l'orifice de sortie formé dans la virole interne 5 pour l'évacuation 6. Il présente un orifice d'entrée 19 en communication fluidique avec l'espace interveine 16 et la veine d'écoulement primaire 10 quand la porte 12 est ouverte. Il présente par ailleurs une longueur de conduit L1 correspondant à une distance minimum entre l'orifice d'entrée 19 et l'orifice de sortie au niveau de la virole interne 5 (évacuation 6).

Ces ailettes 22 sont ainsi configurées pour orienter un flux d'air de décharge F3 en provenance de la veine d'écoulement primaire 10 et l'injecter dans la veine d'écoulement secondaire 14 suivant une direction sensiblement parallèle à celle du flux secondaire F2, afin de réduire les pertes de charge dans la veine d'écoulement secondaire 14. On prévoit avantageusement par exemple de 1 à 4 ailettes de décharge 22 dans un manchon 18 (de 2 à 5 conduits 21).

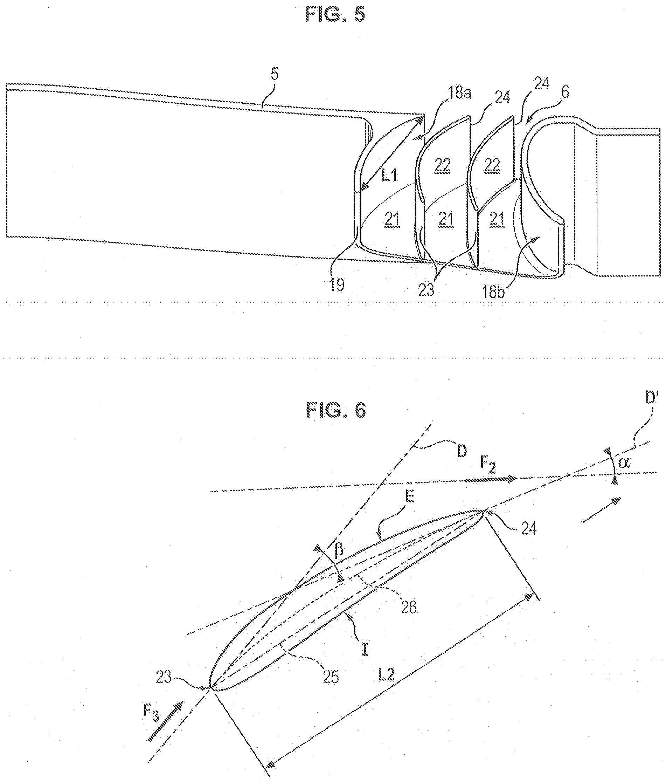

Les ailettes de décharge 22 sont des ailettes profilées, chacune d'entre elles comportant un bord d'attaque 23, un bord de fuite 24, des parois d'extrados E et d'intrados I s'étendant entre le bord d'attaque 23 et le bord de fuite 24, une corde 25, une ligne de squelette 26 et une longueur de corde L2 (figure 6).

Dans ce qui suit (voir figure 5), on comprendra par « profil » d'une ailette de décharge 22 une section transversale de l'ailette de décharge 22, c'est-à-dire une section de l'ailette de décharge 22 selon un plan globalement perpendiculaire à l'extrados E et à l'intrados I de l'ailette de décharge 22, au niveau du pied de l'ailette de décharge 22. On comprendra par « corde » 25 d'une ailette de décharge 22 le segment de droite fictif qui a pour extrémités le bord d'attaque 23 et le bord de fuite 24 du profil de l'ailette de décharge 22. Par ailleurs, on comprendra par « longueur de corde » L2 d'une ailette de décharge 22 la distance entre le bord d'attaque 23 et le bord de fuite 24 du profil de l'ailette de décharge 22, ou autrement dit la longueur de la corde 25 de cette ailette de décharge 22. Enfin, par « ligne de squelette » 26 d'une ailette de décharge 22, on comprendra la ligne fictive qui comprend l'ensemble des points équidistants de l'extrados E et de l'intrados I du profil de l'ailette de décharge 22

Afin de réduire les pertes de charge et les risques de décollement du flux secondaire F2 et d'augmenter l'opérabilité de la turbomachine, notamment lorsque la longueur de conduit L1 est réduite en raison du faible espace disponible entre la veine d'écoulement primaire 10 et la veine d'écoulement secondaire 14 (interveine 16), la longueur de corde L2 d'au moins l'une des ailettes de décharge 22 est au moins égale à 50% de la longueur de conduit L1.

Dans un mode de réalisation, la longueur de corde L2 de l'ensemble des ailettes de décharge 22 de la grille VBV est au moins égale à 50% de la longueur de conduit L1.

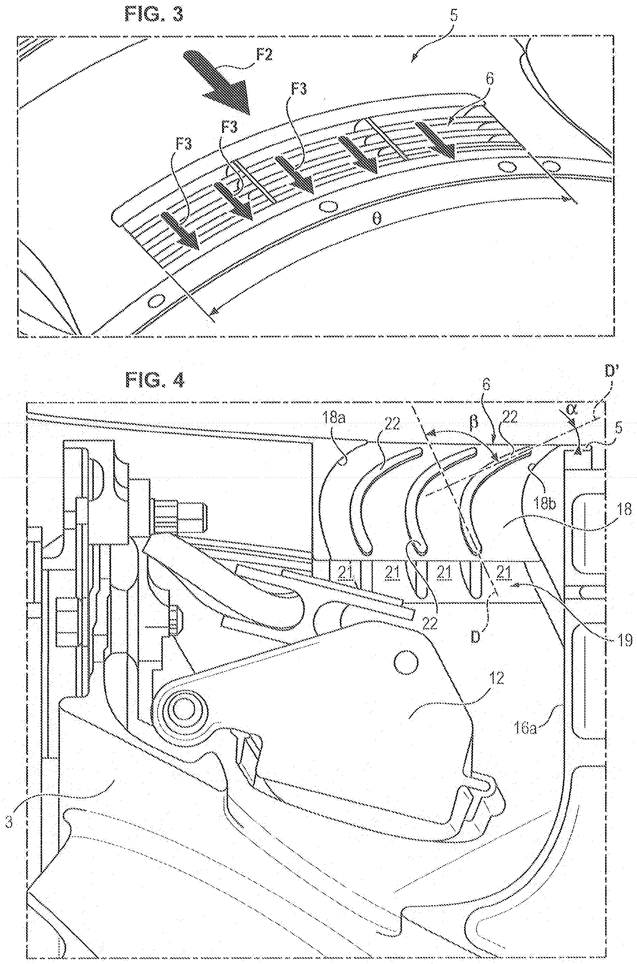

De la sorte, les ailettes de décharge 22 forment, avec la paroi amont 18a et la paroi aval 18b, des canaux de guidage (voir notamment la figure 4 qui illustre quatre canaux de guidage) du flux de décharge F3 entre l'espace interveine 16 et l'orifice d'évacuation 6 et permettant de modifier de manière continue et progressive la direction de l'écoulement du flux de décharge F3 et de le redresser. Lors de l'injection du flux de décharge F3 dans la veine d'écoulement secondaire 14 (c'est-à-dire au niveau de la sortie du manchon 18), le flux de décharge F3 est alors sensiblement aligné avec le flux secondaire F2 et n'a pas tendance à former des tourbillons en aval de l'évacuation 6, ce qui diminue voire annule les pertes aérodynamiques.

Dans une forme de réalisation, la longueur de corde L2 d'au moins l'une des ailettes de décharge 22 (et de préférence de l'ensemble des ailettes de décharge 22) est au moins égale à 75% de la longueur de conduit L1, de préférence au moins égale à 85% de la longueur de conduit L1, par exemple entre 95% et 110% de la longueur de conduit L1. On notera en effet que les ailettes de décharge 22 peuvent affleurer l'orifice d'entrée 19 et l'orifice de sortie 6, auquel cas la longueur de corde L2 des ailettes de décharge 22 peut même être supérieure à la longueur de conduit L1 (voir par exemple figure 5).

Afin de capter un maximum du flux de décharge F3 dans le manchon 18, un rapport entre les sections $S_1$ et $S_2$ du conduit d'air 21 le plus en aval du manchon 18 est compris entre 1.5 et 3, de préférence égal à environ 2.5 (à 10% près). Par conduit d'air 21 le plus en aval, on comprendra ici la portion du manchon 18 s'étendant entre l'orifice d'entrée 19 et l'orifice de sortie 6 et délimitée en aval par la paroi aval 18b et en amont par l'ailette de décharge 22 la plus proche de la paroi aval 18b. Par section $S_1$ on comprendra ici la surface du conduit d'air 21 le plus en aval, ladite section $S_1$ s'étendant dans un plan normal à la paroi intrados I de l'ailette de décharge la plus en aval du manchon 18, au niveau du bord d'attaque 23 de l'ailette de décharge 22 la plus en aval. Par section $S_2$ on comprendra ici la surface du conduit d'air 21 le plus en aval, ladite section $S_2$ s'étendant dans un plan normal à la paroi intrados I de l'ailette de décharge 22 la plus en aval du manchon, au niveau du bord de fuite 24 de l'ailette de décharge 22 la plus en aval.

L'invention trouve particulièrement application dans le cas des moteurs très compacts, c'est-à-dire dont le rapport h/H est au plus égal à 0.5 :

$$\frac{h}{H} \leq 0.5$$

Où : H est la distance suivant un axe radial entre la virole interne 3 et la virole externe 5 du moyeu de carter intermédiaire, et

h est la longueur curviligne de la paroi intérieure aval 18b du manchon 18.

De manière optionnelle, chaque ailette de décharge 22 peut être positionnée dans le conduit de veine de décharge 18 de sorte que l'angle d'incidence du flux de décharge F3 sur l'ailette de décharge 22 soit sensiblement aligné avec sa cambrure au niveau de son bord d'attaque 23 (F3 parallèle à la droite D tangente à la ligne de squelette 26 au niveau du bord d'attaque 23).

L'espace interveine 16 comprend une paroi de fond 16a, correspondant à la paroi la plus en aval de l'espace interveine et qui s'étend entre la virole interne 3, au niveau de l'orifice d'admission, et la virole externe, au niveau de l'évacuation 6. La paroi de fond 16a comprend donc la paroi aval 18b du manchon 18. Cette paroi de fond 16a est définie en deux parties pour assurer le redressement du flux de décharge. Une première partie A (en traits discontinus sur la figure 2), s'étendant depuis la virole interne 3 sur une longueur curviligne comprise entre 75% et 90% de sa longueur curviligne totale est configurée pour capter et accélérer le flux de décharge F3. Cette première partie A comprend une portion de la paroi aval 18b du manchon 18. Une deuxième partie B (en pointillés sur la figure 2), s'étendant entre la première partie et l'évacuation 6 redresse radialement le flux pour favoriser la transition avec le flux secondaire F2. Cette deuxième partie B comprend le reste de la paroi aval 18b.

Par ailleurs, la première partie de la paroi de fond 16a comprend une première sous-partie A1, s'étendant entre la virole interne 3 et la paroi aval 18b du manchon 18, et une deuxième sous-partie A2 s'étendant entre l'extrémité radialement intérieure de la paroi aval 18b du manchon 18 et la deuxième partie B. L'angle entre la première sous-partie A1 et la deuxième sous-partie A2 est compris entre 125° et 135°, de sorte à accélérer le flux de gaz F3 lors de son introduction dans le manchon 18. En d'autres termes, la partie A2 de la paroi aval 18b du manchon est configurée pour former un angle compris entre 35° et 45° avec l'axe de révolution du moyeu 2.

En outre, l'angle de déviation β (différence entre l'angle d'entrée et l'angle de sortie α définis par les pentes de profil) du flux F3 traversant les différents conduits 21 définies par les ailettes 22 et les parois intérieures du manchon 18 est compris entre 70° et 90°, de sorte que la liaison entre la première et la deuxième partie est définie par une inversion de la direction de la déviation du flux de décharge. De préférence, la sortie de la seconde partie des ailettes de décharge 22 et de la paroi aval 18b (et le cas échéant de la paroi amont 18a) est tangente à la virole externe. En d'autres termes, la droite tangente à la cambrure des ailettes de décharge 22 au niveau du bord de fuite est sensiblement parallèle à la direction d'écoulement du flux secondaire F2. Pour cela, la cambrure au bord de fuite 24 et des parois 18a et 18b doit donc être proche de la direction de l'écoulement F2 de sorte que l'angle α entre la direction d'écoulement de F2 et la tangente à la droite D' qui est parallèle à la ligne de squelette au niveau du bord de fuite est compris entre 5° et 35° maximum.

Enfin, au moins l'une des ailettes de décharge 22 présente une étendue azimutale θ comprise entre 30° et 50°, par exemple de l'ordre de 40°, où l'étendue azimutale correspond à une portion angulaire de l'ailette de décharge 22 qui est vue par le flux secondaire F2.

**Revendications**

1. Carter intermédiaire (2) pour une turbomachine à double flux, ledit carter comprenant :

   - une virole interne (3) configurée pour délimiter une veine d'écoulement primaire (10) du flux de gaz primaire (F1) de la turbomachine,
   - une virole externe (5) configurée pour délimiter une veine d'écoulement secondaire (14) du flux de gaz secondaire (F2) de ladite turbomachine,
   - au moins une évacuation (6) débouchant de la virole externe (5) dans la veine d'écoulement secondaire (14), l'évacuation (6) comprenant un manchon d'évacuation (18) et une ou plusieurs ailettes de décharge qui s'étendent dans ledit manchon (18), des ailettes et des parois du manchon définissant ensemble plusieurs conduits de redressement adaptés pour évacuer un flux de gaz (F3) de l'espace interveine (16) en le redirigeant dans la veine d'écoulement secondaire,
   - un espace interveine (16) comprenant une paroi de fond (16a) s'étendant entre la virole interne (3) et l'évacuation (6) de la virole externe (5), ladite paroi de fond présentant une longueur curviligne totale entre la virole interne (3) et la virole externe (5),
   - au moins une vanne de décharge (12) pour la dérivation d'une partie du flux primaire dans l'espace interveine (16) le carter étant **caractérisé en ce que** la longueur de corde (L2) d'au moins l'une des ailettes (22) est supérieure à 50% d'une longueur de conduit (L1) du manchon (18) et **en ce que** l'espace interveine (16) comprend :

      - une première partie (A) s'étendant depuis la virole interne (3) sur une longueur curviligne comprise entre 75% et 90% de sa longueur curviligne totale et configurée pour capter et accélérer le flux de gaz (F3), ladite première partie (A) comprenant une portion du manchon (18), et

   une deuxième partie (B), s'étendant entre la première partie (A) et l'évacuation (6) et configurée pour redresser le flux de gaz (A) pour favoriser la transition avec le flux de gaz secondaire (F2).

2. Carter intermédiaire (2) selon la revendication 1, dans lequel la longueur de corde (L2) de l'ensemble des ailettes de décharge (22) est au moins égale à 75% de la longueur de conduit (L1).

3. Carter intermédiaire (2) selon la revendication 2, dans lequel la longueur de corde (L2) de l'ensemble des ailettes de décharge (22) est comprise entre 75% et 110 % de la longueur de conduit (L1).

4. Carter intermédiaire selon l'une des revendications 1 à 3, dans lequel la première partie de la paroi de fond (16a) comprend une première sous-partie (A1), s'étendant entre la virole interne (3) et l'extrémité radialement intérieure du manchon (18), et une

deuxième sous-partie (A2) s'étendant entre l'extrémité radialement intérieure du manchon (18) et la deuxième partie (B), un angle entre la première sous-partie et la deuxième sous-partie étant compris entre 125° et 135°, de sorte à accélérer le flux de gaz (F3) lors de son introduction dans le manchon (18).

**5.** Carter intermédiaire selon l'une des revendications 1 à 3, dans lequel le manchon (18) comprend une paroi interne amont (18a) et une paroi interne aval (18b) entre lesquelles s'étendent la ou les ailettes de décharge, dont un conduit interne le plus en aval (21) délimité d'une part par la paroi interne aval (18b) et d'autre part par une paroi intrados (I) de l'ailette de décharge (22) la plus en aval dans la direction d'écoulement du flux de gaz secondaire (D2), ledit conduit interne le plus en aval (21) présentant une première section ($S_1$) correspondant à une surface dudit conduit (21) s'étendant dans un plan normal à ladite paroi intrados (I) au niveau d'un bord d'attaque (23) de l'ailette de décharge (22) la plus en aval, et une deuxième section ($S_2$) correspondant à une surface dudit conduit (21) s'étendant dans un plan normal à ladite paroi intrados (I) au niveau d'un bord de fuite (24) de l'ailette de décharge (22) la plus en aval, un rapport entre la première section ($S_1$) et la deuxième section ($S_2$) étant compris entre 1.5 et 3, de préférence égal à environ 2.5.

**6.** Carter intermédiaire (2) selon l'une des revendications 1 à 5, dans lequel le manchon (18) présente une paroi intérieure amont (18) et une paroi intérieur aval (18b), entre lesquelles sont disposées la ou les ailettes de décharge (22) et un rapport h/H est au plus égal à 0.5 :

$$\frac{h}{H} \leq 0.5$$

Où : H est une distance suivant un axe radial à un axe de révolution du carter intermédiaire, entre la virole interne (3) et la virole externe (5), et
h est une longueur curviligne de la paroi intérieure aval (18b) du manchon 18.

**7.** Carter intermédiaire (2) selon l'une des revendications 1 à 6, comprenant entre 1 et 4 ailettes de décharge (22).

**8.** Carter intermédiaire (2) selon l'une des revendications 1 à 7, dans lequel la cambrure du bord d'attaque d'une ailette est alignée avec la direction du flux de gaz au niveau de celui-ci.

**9.** Carter intermédiaire (2) selon l'une des revendications 1 à 8, dans lequel la direction de la cambrure d'une ailette au bord de fuite de celle-ci fait un angle ($\alpha$) inférieur à 35°, préférentiellement 5°, par rapport à la direction d'écoulement dans la veine secondaire.

**10.** Carter intermédiaire (2) selon l'une des revendications 1 à 9, dans lequel l'angle ($\beta$) de déviation entre l'entrée et la sortie des différents conduits est compris entre 70° et 90°.

**11.** Carter intermédiaire (2) selon l'une des revendications 1 à 10, dans lequel au moins l'une des ailettes de décharge (22) présente une étendue azimutale ($\theta$) comprise entre 30 et 50°, par exemple de l'ordre de 40°.

**12.** Turbomachine comprenant un carter intermédiaire (1) selon l'une des revendications 1 à 11.

**Patentansprüche**

**1.** Zwischengehäuse (2) einer Doppelstrom-Turbotriebwerk, wobei das Gehäuse umfasst:

- einen Innenmantel (3), der konfiguriert ist, um eine Primärströmungsbahn (10) des Primärgasstroms (F1) des Turbotriebwerks zu begrenzen,
- einen Außenmantel (5), der konfiguriert ist, um eine Sekundärströmungsbahn (14) des Sekundärgasstroms (F2) des Turbotriebwerks zu begrenzen,
- mindestens eine Ausleitung (6), die aus dem Außenmantel (5) in die Sekundärströmungsbahn (14) mündet, wobei die Ausleitung (6) eine Ausleitungsmuffe (18) und eine oder mehrere Ablaufrippen umfasst, die sich in der Muffe (18) erstrecken, wobei Rippen und Wände der Muffe gemeinsam mehrere Richtleitungen definieren, die angepasst sind, um einen Gasstrom (F3) aus dem Raum zwischen den Strömungsbahnen (16) auszubringen, indem sie ihn in die Sekundärströmungsbahn umleiten,
- einen Raum zwischen den Strömungsbahnen (16), der eine Bodenwand (16a) umfasst, die sich zwischen dem Innenmantel (3) und der Ausleitung (6) des Außenmantels (5) erstreckt, wobei die Bodenwand eine krummlinige Gesamtlänge zwischen dem Innenmantel (3) und dem Außenmantel (5) aufweist,
- mindestens ein Ablassventil (12) zum Umleiten eines Teils des Primärstroms in den Raum zwischen den Strömungsbahnen (16)

wobei das Gehäuse **dadurch gekennzeichnet ist, dass** die Sehnenlänge (L2) mindestens einer der Rippen (22) größer als 50 % einer Leitungslänge (L1) der Muffe (18) ist, und dadurch, dass der Raum zwischen den Strömungsbahnen (16) umfasst:

- einen ersten Teil (A), der sich aus dem Innenmantel (3) über eine krummlinige Länge erstreckt, die zwischen 75 % und 90 % seiner krummlinigen Gesamtlänge liegt, und konfiguriert, um den Gasstrom (F3) zu erfassen und zu beschleunigen, wobei der erste Teil (A) einen Abschnitt der Muffe (18) umfasst, und

einen zweiten Teil (B), der sich zwischen dem ersten Teil (A) und der Ausleitung (6) erstreckt und konfiguriert, um den Gasstrom (A) zu richten, um den Übergang mit dem Sekundärgasstrom (F2) zu fördern.

2. Zwischengehäuse (2) nach Anspruch 1, wobei die Sehnenlänge (L2) der Reihe von Ablaufrippen (22) mindestens gleich 75 % der Leitungslänge (L1) entspricht.

3. Zwischengehäuse (2) nach Anspruch 2, wobei die Sehnenlänge (L2) der Reihe von Ablaufrippen (22) zwischen 75 % und 110 % der Leitungslänge (L1) liegt.

4. Zwischengehäuse nach einem der Ansprüche 1 bis 3, wobei der erste Teil der Bodenwand (16a) einen ersten Unterabschnitt (A1) umfasst, der sich zwischen dem Innenmantel (3) und dem radial inneren Ende der Muffe (18) erstreckt, und einen zweiten Unterabschnitt (A2), der sich zwischen dem radial inneren Ende der Muffe (18) und dem zweiten Teil (B) erstreckt, wobei ein Winkel zwischen dem ersten Unterabschnitt und dem zweiten Unterabschnitt zwischen 125° und 135° derart liegt, um den Gasstrom (F3) bei dessen Einleitung in die Muffe (18) zu beschleunigen.

5. Zwischengehäuse nach einem der Ansprüche 1 bis 3, wobei die Muffe (18) eine stromaufwärtige Innenwand (18a) und eine stromabwärtige Innenwand (18b) umfasst, zwischen denen sich die Ablaufrippe oder Ablaufrippen erstrecken, darunter eine stromabwärtigste Innenleitung (21), die einerseits durch die stromabwärtige Innenwand (18b) und andererseits durch eine Laibungswand (I) der stromabwärtigsten Ablaufrippe (22) in der Strömungsrichtung des Sekundärgasstroms (D2) begrenzt ist, wobei die stromabwärtigste Innenleitung (21) einen ersten Querschnitt (S₁) aufweist, der einer Oberfläche der Leitung (21) entspricht, die sich in einer Ebene normal zur Laibungswand (I) im Bereich einer Vorderkante (23) der stromabwärtigsten Ablaufrippe (22) erstreckt, und einen zweiten Querschnitt (S₂), der einer Oberfläche der Leitung (21) entspricht, die sich in einer Ebene normal zur Laibungswand (I) im Bereich einer Hinterkante (24) der stromabwärtigsten Ablaufrippe (22) erstreckt, wobei ein Verhältnis zwischen dem ersten Querschnitt (S₁) und dem zweiten Querschnitt (S₂) zwischen 1,5 und 3 liegt, vorzugsweise gleich etwa 2,5 ist.

6. Zwischengehäuse (2) nach einem der Ansprüche 1 bis 5, wobei die Muffe (18) eine stromaufwärtige Innenwand (18) und eine stromabwärtige Innenwand (18b) aufweist, zwischen denen die Ablaufrippe oder Ablaufrippen (22) angeordnet sind, und ein Verhältnis h/H höchstens gleich 0,5 ist:

$$\frac{h}{H} \leq 0,5$$

Wobei: H ein Abstand entlang einer radialen Achse zu einer Drehachse des Zwischengehäuses zwischen dem Innenmantel (3) und dem Außenmantel (5) ist, und
h eine krummlinige Länge der stromabwärtigen Innenwand (18b) der Muffe 18 ist.

7. Zwischengehäuse (2) nach einem der Ansprüche 1 bis 6, zwischen 1 und 4 Ablaufrippen (22) umfassend.

8. Zwischengehäuse (2) nach einem der Ansprüche 1 bis 7, wobei die Wölbung der Vorderkante einer Rippe mit der Richtung des Gasstroms im Bereich desselben ausgerichtet ist.

9. Zwischengehäuse (2) nach einem der Ansprüche 1 bis 8, wobei die Richtung der Wölbung einer Rippe an der Hinterkante derselben einen Winkel (α) kleiner als 35°, vorzugsweise 5° in Bezug auf die Strömungsrichtung in der Sekundärströmungsbahn einschlägt.

10. Zwischengehäuse (2) nach einem der Ansprüche 1 bis 9, wobei der Umlenkungswinkel (β) zwischen dem Einlass und dem Auslass der verschiedenen Leitungen zwischen 70° und 90° liegt.

11. Zwischengehäuse (2) nach einem der Ansprüche 1 bis 10, wobei mindestens eine der Ablaufrippen (22) eine Azimutausdehnung (θ) aufweist, die zwischen 30 und 50°, beispielsweise in der Größenordnung von 40° liegt.

12. Turbotriebwerk, ein Zwischengehäuse (1) nach einem der Ansprüche 1 bis 11 umfassend.

**Claims**

1. An intermediate housing hub (2) for a double flow turbomachine, said hub comprising:

- an inner shroud ring (3) configured to delimit a primary outflow stream (10) of the primary gas flow (F1) of the turbomachine,
- an outer shroud ring (5) configured to delimit a secondary outflow stream (14) of the secondary gas flow (F2) of said turbomachine,
- at least one discharge (6) leading from the outer shroud ring (5) into the secondary outflow stream (14), the discharge (6) comprising a discharge sleeve (18) and one or more discharge fins which extend within said sleeve (18), fins and walls of the sleeve defining together several redirecting ducts designed to discharge a gas flow (F3) from the inter-stream volume (16) by redirecting it into the secondary outflow stream,
- an inter-stream volume (16) comprising a bottom wall (16a) extending between the inner shroud ring (3) and the discharge (6) of the outer shroud ring (5), said bottom wall having a total curvilinear length between the inner shroud ring (3) and the outer shroud ring (5),
- at least one discharge valve (12) for bypassing a portion of the primary flow into the inter-stream volume (16)

the hub being **characterised in that** the chord length (L2) of at least one of the fins (22) being greater than 50% of a duct length (L1) of the sleeve (18) and **in that** the inter-stream volume (16) comprises:

- a first portion (A), extending from the inner shroud ring (3) over a curvilinear length comprised between 75% and 90% of its total curvilinear length and configured to capture and accelerate the gas flow (F3), said first portion (A) comprising a portion of the sleeve (18), and
- a second portion (B), extending between the first portion (A) and the discharge (6) and configured to redirect the gas flow (A) to improve the transition with the secondary gas flow (F2).

2. The intermediate housing hub (2) according to claim 1, wherein the chord length (L2) of all the discharge fins (22) is at least equal to 75% of the duct length (L1).

3. The intermediate housing hub (2) according to claim 2, wherein the chord length (L2) of all the discharge fins (22) is comprised between 75% and 110% of the duct length (L1).

4. The intermediate housing hub according to one of claims 1 to 3, wherein the first portion of the bottom wall (16a) comprises a first sub-portion (A1), extending between the inner shroud ring (3) and the radially inner end of the sleeve (18), and a second sub-portion (A2) extending between the radially inner end of the sleeve (18) and the second portion (B), an angle between the first sub-portion and the second sub-portion being comprised between 125° and 135°, so as to accelerate the flow of gas (F3) during its introduction into the sleeve (18).

5. The intermediate housing hub according to one of claims 1 to 3, wherein the sleeve (18) comprises an upstream inner wall (18a) and a downstream inner wall (18b) between which the discharge fin(s) extend(s), of which a farthest downstream inner duct (21) delimited on the one hand by the downstream inner wall (18b) and on the other hand by a pressure side wall (I) of the farthest downstream discharge fin (22) in the outflow direction of the secondary gas flow (D2), said farthest downstream inner duct (21) having a first cross section ($S_1$) corresponding to a surface of said duct (21) extending in a plane normal to the pressure side wall (I) at a leading edge (23) of the farthest downstream discharge fin (22), and a second cross section ($S_2$) corresponding to a surface of said duct (21) extending in a plane normal to said pressure side wall (I) at a trailing edge (24) of the farthest downstream discharge fin (22), a ratio between the first cross section ($S_1$) and the second cross section ($S_2$) being comprised between 1.5 and 3, preferably equal to approximately 2.5.

6. The intermediate housing hub (2) according to one of claims 1 to 5, wherein the sleeve (18) has an upstream inner wall (18) and a downstream inner wall (18b), between which are disposed the discharge fin(s) (22) and a ratio h/H is at most equal to 0.5:

$$\frac{h}{H} \le 0.5$$

Where: H is a distance along a radial axis to a revolution axis of the intermediate housing hub, between the inner shroud ring (3) and the outer shroud ring (5), and
h is a curvilinear length of the downstream inner wall (18b) of the sleeve 18.

7. The intermediate housing hub (2) according to one of claims 1 to 6, comprising between 1 and 4 discharge fins (22).

8. The intermediate housing hub (2) according to one of claims 1 to 7, wherein the camber of the leading edge of a fin is aligned with the direction of the gas flow at the level thereof.

9. The intermediate housing hub (2) according to one of claims 1 to 8, wherein the direction of the camber of a fin at the trailing edge thereof forms an angle ($\alpha$) smaller than 35°, preferably 5°, with respect to the outflow direction in the secondary stream.

10. The intermediate housing hub (2) according to one of claims 1 to 9, wherein the deviation angle ($\beta$) between the inlet and the outlet of the different ducts is comprised between 70° and 90°.

11. The intermediate housing hub (2) according to one of claims 1 to 10, wherein at least one of the discharge fins (22) has an azimuth range ($\theta$) comprised between 30 and 50°, for example on the order of 40°.

12. A turbomachine comprising an intermediate housing hub (1) according to one of claims 1 to 11.

## FIG. 1

FIG. 2

FIG. 3

FIG. 4

FIG. 5

FIG. 6

FIG. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3002296